# EUROPEAN PATENT APPLICATION

(11) **EP 4 779 463 A1**
(43) Date of publication of application: **22.07.2026**
(21) Application number: 24866873.3
(22) Date of filing: 11.05.2024
(51) Int. Cl.: G06F 9/445

(54) **APPLICATION PROGRAM RUNNING METHOD, NODE AND COMPUTING DEVICE CLUSTER**

(30) Priority: 19.09.2023 CN 202311211237; 14.11.2023 CN 202311514763
(71) Applicant: Huawei Cloud Computing Technologies Co., Ltd., Gui'an New District, Guizhou 550025 (CN)
(72) Inventor: LI, Lai, Guiyang, Guizhou 550025 (CN); YANG, Yi, Guiyang, Guizhou 550025 (CN); LUAN, Wenfei, Guiyang, Guizhou 550025 (CN)
(74) Representative: Goddar, Heinz J.
(86) International application number: PCT/CN2024/092511
(87) International publication number: WO 2025/060449

(57) **Abstract**

An application running method, a node, and a compute device cluster are disclosed. The method includes: A first container in a first container group loads bytecode in a first Java archive, to obtain a second Java archive of an application, where the second Java archive includes first bytecode of a to-be-enhanced class in the application, the first container runs a first enhancement component, and the first bytecode is obtained by modifying, by the first enhancement component, bytecode of the to-be-enhanced class in the first Java archive in a process in which the first container loads the bytecode in the first Java archive; a second container in the first container group loads bytecode in the second Java archive, to obtain a first loading result; and the second container runs the application based on the first loading result. The method can implement timely service scale-out or efficient service deployment.

## Description

This application claims priorities to Chinese Patent Application No. 202311211237.X, filed with the China National Intellectual Property Administration on September 19, 2023 and entitled "BYTECODE ENHANCEMENT STARTUP ACCELERATION METHOD AND APPARATUS", and to Chinese Patent Application No. 202311514763.3, filed with the China National Intellectual Property Administration on November 14, 2023 and entitled "APPLICATION RUNNING METHOD, NODE, AND COMPUTE DEVICE CLUSTER", both of which are incorporated herein by reference in their entireties.

### TECHNICAL FIELD

This application relates to the field of computer technologies, and in particular, to an application running method, a node, and a compute device cluster.

### BACKGROUND

A bytecode enhancement (bytecode enhancement) technology is a technology that is used to modify bytecode of a Java application during startup and running of the Java application, to enhance functions of the Java application. The bytecode enhancement technology can enhance the functions of the Java application without modifying source code of the Java application, thereby avoiding damage to the source code when the Java application is maintained and upgraded.

During a startup process of the Java application, implementing the bytecode enhancement technology prolongs duration for starting the Java application, and consequently, the Java application cannot run in a timely manner.

### SUMMARY

Embodiments of this application provide an application running method, a node, and a compute device cluster, so that impact of bytecode enhancement on duration for starting an application can be avoided or reduced while ensuring a bytecode enhancement effect of the application, and the application can run in a timely manner, so as to implement timely service scale-out or efficient service deployment.

According to a first aspect, an application running method is provided, which is applied to a microservice architecture, where the microservice architecture includes a first container group, and the microservice architecture stores a first Java archive of an application. The method includes: A first container in the first container group loads bytecode in the first Java archive, to obtain a second Java archive of the application, where the second Java archive includes first bytecode of a to-be-enhanced class in the application, the first container runs a first enhancement component, and the first bytecode is obtained by modifying, by the first enhancement component, bytecode of the to-be-enhanced class in the first Java archive in a process in which the first container loads the bytecode in the first Java archive; a second container in the first container group loads bytecode in the second Java archive, to obtain a first loading result, where the first loading result includes a first object of the to-be-enhanced class, and the first object is created by the second container based on the first bytecode in a process in which the second container loads the bytecode in the second Java archive; and the second container runs the application based on the first loading result. The application refers to a Java application.

In the microservice architecture, a container is used as a service instance in a container group, and is configured to provide one or more services. Specifically, the container runs the application, and the running application enables the container to provide a corresponding service. In other words, the container is not naturally a service instance. Instead, after the container is created, the container starts and runs the application to become the service instance.

In the method provided in this embodiment of this application, when a service needs to be deployed in the container group, a first container in the container group may perform, in a process of loading a Java archive (that is, the first Java archive) of an application corresponding to the service, bytecode enhancement on the Java archive of the application, and include enhanced bytecode in the Java archive of the application, to obtain an enhanced Java archive (that is, the second Java archive). Then, a second container in the container group may load the enhanced Java archive, to start the application in the second container.

The enhanced Java archive includes the enhanced bytecode. Therefore, in a process in which the second container loads the enhanced Java archive, a bytecode enhancement operation does not need to be performed. This can reduce duration for starting the application while implementing a bytecode enhancement effect of the application, thereby implementing quick startup of the application in the second container. This improves service deployment efficiency in the container group, so that the container group can provide a service and respond to a service requirement in a timely manner. In particular, in a service scale-out scenario, a newly created container in the container group may quickly start and run the application by loading the enhanced Java archive, thereby implementing timeliness of service scale-out.

In a possible implementation, the second container runs a second enhancement component, the second Java archive includes a list, and the list includes an identifier of the to-be-enhanced class; and that the second container loads the bytecode in the second Java archive includes: The second container obtains the list from the second Java archive, where in the process in which the second container loads the bytecode in the second Java archive, the list indicates that a modification operation on the first bytecode is already completed.

In this implementation, the list in the second Java archive indicates that the modification operation on the first bytecode is already completed. In this way, when the second container loads the second Java archive, the second enhancement component in the second container may ignore the class represented by the identifier in the list, and no longer identify the class represented by the identifier in the list, thereby reducing time consumed for identification, and further reducing startup time consumption of the application.

In a possible implementation, the microservice architecture further includes a second container group, and the method further includes: a third container in the second container group loads the bytecode in the second Java archive, to obtain a second loading result; and the third container runs the application based on the second loading result.

In this implementation, when a service provided by the first container group cannot meet the service requirement, and scale-out of a service is needed, the service may be deployed in another container group such as the second container group. To deploy the service in the second container group, a container in the second container group needs to start and run an application corresponding to the service. The container in the second container group may load an enhanced Java archive (that is, the second Java archive) of the application, to quickly start and run the application, so that the service can be quickly provided, thereby implementing the timeliness of the service scale-out.

In a possible implementation, the microservice architecture further includes a management platform, and the method further includes: The management platform modifies an obtaining address of a Java archive from a storage address of the first Java archive to a storage address of the second Java archive; and that the second container loads the bytecode in the second Java archive includes: The second container obtains, based on the obtaining address, the second Java archive.

In this implementation, the management platform may change an address used by the container to obtain the Java archive to a storage address of the enhanced Java archive. Therefore, when the application needs to be started, the container obtains the enhanced Java archive based on the address, and then the enhanced Java archive can be loaded to implement startup of the application.

In a possible implementation, the method further includes: When an exception occurs when the second container runs the application based on the first loading result, the second container loads the first Java archive, to obtain a third loading result; and the second container runs the application based on the third loading result.

In this implementation, when an exception occurs when a container runs the application, the container may start and run the application by loading an original Java archive (that is, the first Java archive), to ensure that the application can run normally, and further ensure service stability.

In a possible implementation, the first container is a container that is in the microservice architecture and that initially loads the first Java archive.

In this implementation, when the Java archive (specifically, the first Java archive) of the application is initially loaded, the enhanced Java archive of the application is generated, so that a container that subsequently starts the application can start the application by loading the enhanced Java archive. This improves efficiency of deploying a service corresponding to the application in the microservice architecture.

According to a second aspect, a node that runs a container group is provided, where the node runs a first container group, and the node stores a first Java archive of an application. A first container in the first container group is configured to: load bytecode in the first Java archive, to obtain a second Java archive of the application, where the second Java archive includes first bytecode of a to-be-enhanced class in the application, the first container runs a first enhancement component, and the first bytecode is obtained by modifying, by the first enhancement component, bytecode of the to-be-enhanced class in the first Java archive in a process in which the first container loads the bytecode in the first Java archive; a second container in the first container group is configured to: load bytecode in the second Java archive, to obtain a first loading result, where the first loading result includes a first object of the to-be-enhanced class, and the first object is created by the second container based on the first bytecode in a process in which the second container loads the bytecode in the second Java archive; and the second container is further configured to: run the application based on the first loading result.

In a possible implementation, the second container runs a second enhancement component, the second Java archive includes a list, and the list includes an identifier of the to-be-enhanced class; and the second container is further configured to: obtain the list from the second Java archive, where in the process in which the second container loads the bytecode in the second Java archive, the list indicates that a modification operation on the first bytecode is already completed.

In a possible implementation, the node further runs a second container group, and a third container in the second container group is configured to: load the bytecode in the second Java archive, to obtain a second loading result; and run the application based on the second loading result.

In a possible implementation, the node is connected to a management platform, and the management platform is configured to: modify an obtaining address of a Java archive from a storage address of the first Java archive to a storage address of the second Java archive; and the second container is configured to: obtain the second Java archive based on the obtaining address.

In a possible implementation, the second container is further configured to: when an exception occurs when the second container runs the application based on the first loading result, load the first Java archive, to obtain a third loading result; and run the application based on the third loading result.

In a possible implementation, the first container is a container that is in the node and that initially loads the first Java archive.

According to a third aspect, an embodiment of this application provides a compute device cluster, which includes at least one compute device, where each compute device includes a processor and a memory; and the processor of the at least one compute device is configured to execute instructions stored in the memory of the at least one compute device, to enable the compute device cluster to perform the method according to the first aspect.

According to a fourth aspect, a computer-readable storage medium is provided, and includes computer program instructions, where when the computer program instructions are performed by a compute device cluster, the compute device cluster performs the method according to the first aspect.

According to a fifth aspect, a computer program product including instructions is provided, where when the instructions are run by a computer device cluster, the computer device cluster is enabled to perform the method according to the first aspect.

For beneficial effects of the second aspect to the fifth aspect, refer to the foregoing descriptions of the beneficial effects of the first aspect. Details are not described herein again.

### BRIEF DESCRIPTION OF DRAWINGS

FIG. 1 is a diagram of a structure of a microservice architecture according to an embodiment of this application;
FIG. 2 is a flowchart of an application running method according to an embodiment of this application;
FIG. 3 is a diagram of an application running method according to an embodiment of this application;
FIG. 4 is a diagram of an application running method according to an embodiment of this application;
FIG. 5 is a diagram of a node according to an embodiment of this application;
FIG. 6 is a diagram of a structure of a compute device according to an embodiment of this application;
FIG. 7 is a diagram of a structure of a compute device cluster according to an embodiment of this application; and
FIG. 8 is a diagram of a structure of a compute device cluster according to an embodiment of this application.

### DESCRIPTION OF EMBODIMENTS

The following describes solutions provided in embodiments of this application with reference to the accompanying drawings. In embodiments of this application, "a plurality of" means two or more, and "a plurality of types" means two or more types. Terms such as "first" and "second" are merely intended to distinguish between similar objects, and are not necessarily intended to describe a specific order or a specific quantity of objects.

For ease of understanding the solutions provided in embodiments of this application, technical terms that may be used in embodiments of this application are first described.

A microservice architecture is a service oriented architecture (service oriented architecture, SOA). A complex system is divided into a plurality of small services or applications. The small services or applications may be referred to as microservices. Each microservice is responsible for implementing independent service logic. The microservices are built based on service functions and may be deployed independently. The microservices are interdependent to provide a series of functions. The microservices are easy to understand and modify, bringing flexibility in language and framework selection. The microservice may run in a container (container). Containers in which a plurality of highly interdependent microservices are located may form a container group. In a K8S (kubernetes) system, the container group may be encapsulated into a pod.

A container is a virtual compute instance, belongs to a kernel virtualization technology, and is used to isolate processes and resources. The container and a virtual machine (virtual machine, VM) have similar resource isolation and allocation manners. Compared with the virtual machine, an operating system rather than hardware is virtualized for the container, having higher portability and efficiency.

A service container is also referred to as a user container (user container), and is a container in which a microservice is located, that is, a container in which an application used to provide the microservice runs.

A service mesh is a technology that is used to perform service governance on a service container by using a data proxy outside the service container. In the service mesh, the data proxy obtains a data packet sent by the service container, and performs service governance (for example, traffic management) on the data packet.

A sidecar (sidecar) is a data proxy that is injected into a container group and that is used to perform service governance on a service container in the container group. The sidecar may be implemented by using a container or a process. When the sidecar is implemented by using the container, the sidecar may also be referred to as a sidecar container (sidecar container).

Bytecode (bytecode) is also referred to as a bytecode file, and is a binary file that includes an executable program and that is formed by a sequence of operation (operation, op) code/data pairs. The bytecode is a binary file in an intermediate state, which is compiled from source code and is more abstract than machine code.

Bytecode enhancement is a technology that is used to modify bytecode of a Java application during startup and running of the Java application, to enhance functions of the Java application. The bytecode enhancement is usually used in scenarios such as aspect-oriented programming (aspect-oriented programming, AOP) and dynamic proxy. The bytecode enhancement may be implemented by using Java bytecode operation libraries (such as ByteBuddy and Javassist). The libraries provide some application programming interfaces (application programming interface, API), allowing developers to modify the bytecode of the Java application during the running of the Java application, thereby implementing enhancement of the functions of the application. The bytecode enhancement can enhance the Java application without modifying source code. In this way, damage to original code (that is, the source code) of the Java application can be avoided, and maintenance and upgrade of the Java application are also facilitated. Common bytecode enhancement technologies include method interception, field injection, class (class) enhancement, and the like. These technologies can be used to implement functions such as log recording, performance monitoring, transaction management, and security control.

A Java virtual machine (java virtual machine, JVM) is a language runtime used to execute Java language code. To implement a feature of "write once, run anywhere" in design of the Java language, during compilation, Java code is compiled into bytecode, which is a format that is easy to distribute but cannot be directly run. Subsequently, the Java virtual machine needs to interpret and execute or compile and execute the bytecode, and support operations such as class loading and garbage collection.

A Java application is an application developed using Java. The Java application corresponds to one or more services. A container in a microservice architecture runs the Java application to provide the one or more services. In the following descriptions, the Java application may be briefly referred to as an application.

A Java class (class) may be briefly referred to as a class, is a basic composition unit of code of a Java application, is used to describe a Java object, contains a series of fields (field) that define data and methods (method) that define operations, and is a template of the Java object.

A Java object is a data structure that contains a series of data and a series of methods for operating the data. Each Java object is a specific instance of a corresponding Java class.

A Java heap is a memory space used to store Java objects in a JVM. All Java objects are logically allocated in the Java heap.

A Java archive (java archive, JAR) is also referred to as a JAR package, is a software package file format, and includes bytecode of a Java application, and related metadata and resource (text, images, and the like) files. The bytecode of the Java application includes bytecode of a class of the Java application. A Java archive of the Java application is loaded to start the Java application. The Java archive may include a plurality of subpackages, and each subpackage may include one or more classes.

A JavaAgent is also referred to as an enhancement component, is a new feature introduced after a Java development kit (java development kit, JDK) 1.5, and is used to implement bytecode enhancement. Specifically, the JavaAgent allows, after a JVM reads a bytecode file into a memory and before the JVM generates a Java object in a Java heap by using bytecode of a class, developers to modify the bytecode, so that the JVM can generate the Java object in the Java heap by using modified bytecode, thereby implementing non-intrusive service logic modification and replacement of a Java application. The JavaAgent is a special Java application and is an instrumentation client. Different from a common Java application that is started by using a main method, the JavaAgent is not an application that can be started independently. The JavaAgent is usually attached to a JVM, runs in a same process as the JVM, and interacts with the JVM through an instrumentation API.

A to-be-enhanced class is a class that needs bytecode enhancement during a startup process or a running process of a Java application. Before an object of the to-be-enhanced class is generated, bytecode enhancement needs to be performed on bytecode of the to-be-enhanced class.

An enhanced Java archive is a Java archive of which included bytecode of a to-be-enhanced class is modified by using an enhancement component. The to-be-enhanced class herein refers to a class that needs bytecode enhancement during a startup process of a Java application.

An original Java archive is a Java archive of which included bytecode of a class is not modified by using an enhancement component. The original Java archive may be an original Java archive obtained through compilation of source code of a Java application.

During a loading process (that is, a startup process of the Java application) of a Java archive of the Java application, in bytecode enhancement, a to-be-enhanced class is identified, and bytecode of the to-be-enhanced class is modified (for example, converted or reconverted), to enhance the to-be-enhanced class. Both identifying the to-be-enhanced class and modifying the bytecode of the to-be-enhanced class consume time, and consequently, duration for starting the Java application is increased. Generally, the duration for starting the Java application is increased by at least 30%. In addition, higher complexity of the Java application indicates a larger increment in the duration for starting the Java application. Loading the Java archive is specifically loading bytecode in the Java archive.

In a microservice architecture, service scale-out needs to be performed in a timely manner to cope with sudden service access. The service scale-out needs more containers to run a Java application that provides the service. To ensure timeliness of the service scale-out, the Java application needs to be quickly started in newly created containers. However, bytecode enhancement increases duration for starting the Java application, affecting timeliness of the service scale-out.

In a solution, each time a Java archive of a Java application is loaded, a name of a subpackage in which a class is located in the Java archive is analyzed, some subpackages are filtered out, a to-be-enhanced class is identified from remaining subpackages, and bytecode of the to-be-enhanced class is modified. In this solution, the to-be-enhanced class can be identified in a small range, thereby reducing time consumed for identifying the to-be-enhanced class. However, in this solution, when the Java application is started, the to-be-enhanced class still needs to be identified and the bytecode of the to-be-enhanced class still needs to be modified. In other words, duration for starting the Java application is still increased. In addition, in this solution, each time the Java application is loaded, the name of the subpackage needs to be analyzed in advance, causing complex operations. In addition, when a name of a subpackage in which the to-be-enhanced class is located is the same as a name of a subpackage in which a non-to-be-enhanced class is located, a limited quantity of subpackages are filtered out. In this case, time consumed for identifying the to-be-enhanced class is reduced to a limited extent.

In another solution, in a process of loading a Java archive of a Java application, that is, during a startup process of the Java application, bytecode enhancement is not performed, to avoid impact of the bytecode enhancement on duration for starting the Java application. As this solution cannot enhance a class used in the startup process of the Java application, the solution is limited, and an effect of the bytecode enhancement cannot be fully utilized.

Embodiments of this application provide an application running method. The method may be applied to a microservice architecture, and is used to implement timely service scale-out or efficient service deployment. Specifically, the method may be divided into a pre-enhancement phase and a formal application startup phase. The pre-enhancement phase may be a preparation phase before formal deployment of a service, or may be a phase of initial deployment of the service. The service is a service provided by a container by running an application. In the pre-enhancement phase, bytecode in a Java archive of a Java application is loaded in a container, so that the Java application is started in the container. When the bytecode in the Java archive of the Java application is loaded, an enhancement component running in the container modifies bytecode of a to-be-enhanced class (that is, performs bytecode enhancement on the to-be-enhanced class) in the Java archive, to obtain an updated Java archive. The updated Java archive is used as an enhanced Java archive. In the formal application startup phase (for example, the formal deployment of the service or the service scale-out), the enhanced Java archive is loaded in the container, to start the Java application. Bytecode of the to-be-enhanced class in the enhanced Java archive is bytecode already modified by the enhancement component. Therefore, when the enhanced Java archive is loaded to start the Java application, the to-be-enhanced class does not need to be identified and the bytecode of the to-be-enhanced class does not need to be modified. In this way, startup time consumption of the Java application can be shortened while ensuring that the bytecode enhancement is performed on a class used in a startup process of the Java application. In this way, during the formal deployment of the service or the service scale-out, the Java application can be quickly started in the container, thereby ensuring high efficiency of the service deployment or timeliness of the service scale-out.

The following specifically describes an application running method provided in embodiments of this application.

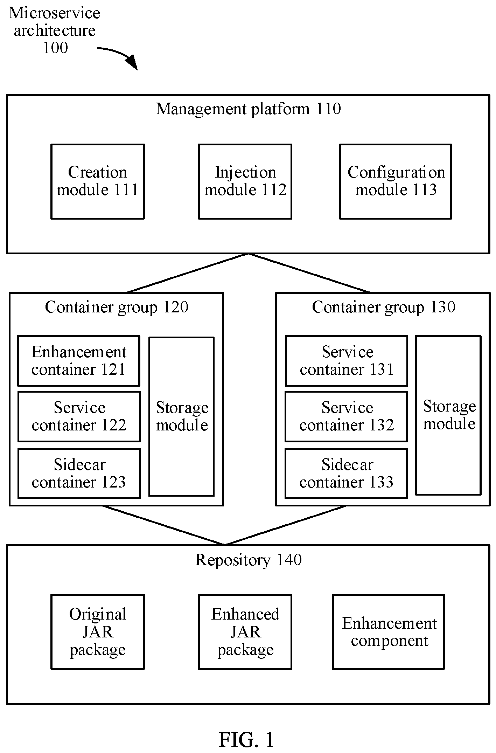

FIG. 1 shows a microservice architecture 100 according to an embodiment of this application. As shown in FIG. 1, the microservice architecture 100 includes a management platform 110, a plurality of container groups, and a repository 140.

The plurality of container groups may include a container group 120, a container group 130, and the like. The container group may include a plurality of containers. For example, the container group 120 may include an enhancement container 121, a service container 122, and a sidecar container 123. For another example, the container group 130 may include a service container 131, a service container 132, and a sidecar container 133. The enhancement container is also referred to as a bytecode enhancement container (bytecode enhancement container), and is a container used to load an original Java archive of a Java application, and modify bytecode of a to-be-enhanced class in the original Java archive during a loading process, to obtain an enhanced Java archive. The enhancement container is an init container (init container) in the container group, and the enhancement container is started before the service container in the container group. The container group may further include a storage module, and the storage module is shared by containers in the container group. In other words, different containers in the container group may store and read data in the storage module of the container group.

The management platform 110 is configured to create and manage the container groups, for example, create a container group, create a container in the container group, and manage a lifecycle of the container or the container group.

As shown in FIG. 1, the management platform 110 may include a container creation module 111 and a container injection module 112. The container creation module 111 may receive an operation of a user, and create a container group based on the operation of the user. The container creation module 111 may inject a container into the container group based on the operation of the user by using the container injection module 112, to create the container. In an example, the user may compile a YAML file used to create a container group or a container. YAML is a markup language and also a format for expressing data serialization. The container creation module 111 may receive the YAML file, and create the container group or the container based on the YAML file. In an example, the container creation module 111 may be implemented as an application programming interface server (application programming interface server, API server) of k8s. The container injection module 112 may be configured to inject a service container or a sidecar container into the container group. The container injection module 112 may further be used as an enhancement container injector (bytecode enhancement container injector) to inject the enhancement container 121 into the container group 120.

In some embodiments, the management platform 110 may further include a configuration module 113. The configuration module 113 may configure an obtaining address of a Java archive of the Java application. The obtaining address is used by a container in the microservice architecture 100 to obtain the Java archive of the Java application, so that the container loads bytecode in the Java archive, and then runs the Java application.

The repository 140 is also referred to as a mirroring (mirroring) repository, and is configured to store data. The repository 140 may be used as a Java archive repository, and is configured to store the Java archive of the Java application. The repository 140 may specifically store the original Java archive and the enhanced Java archive of the Java application. The repository 140 may further be configured to store an enhancement component. The repository 140 is shared by the container groups in the microservice architecture 100, that is, containers in different container groups in the microservice architecture 100 may store and read the data in the repository 140.

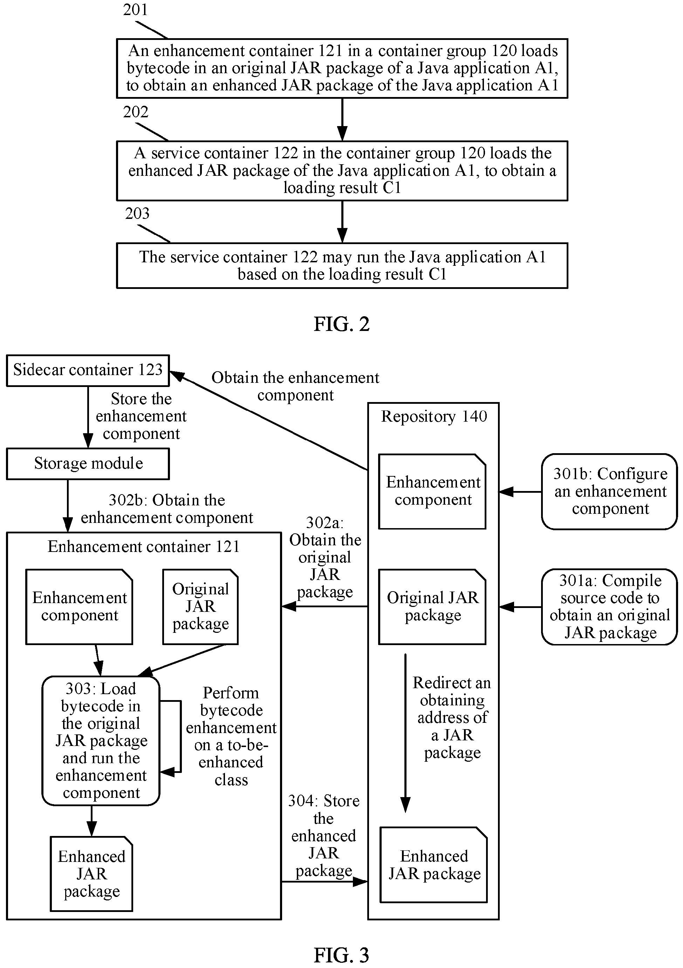

The foregoing example describes the microservice architecture 100 according to this embodiment of this application. The following describes, with reference to the microservice architecture 100, an application running method provided in embodiments of this application. The method may be performed by the management platform 110. As shown in FIG. 2, the method includes the following steps.

Step 201: An enhancement container 121 in a container group 120 loads bytecode in an original Java archive of a Java application A1, to obtain an enhanced Java archive of the Java application A1. The enhancement container 121 runs a JVM, and the original Java archive of the Java application A1 is loaded in the JVM. In addition, in this embodiment of this application, loading bytecode in a Java archive may be briefly referred to as loading the Java archive.

Loading bytecode in a Java archive of a Java application may be understood as a startup process of the Java application. In a process of loading bytecode in a Java archive of a Java application, class objects used to run the Java application are generated. After the loading is completed, these class objects may be used to run the Java application.

Before step 201 is performed, the original Java archive of the Java application A1 may be stored in a microservice architecture 100, for example, stored in a repository 140. For example, as shown in FIG. 3, in step 301a, a management platform 110 may compile source code of the Java application A1, to obtain the original Java archive of the Java application A1. Then, the management platform 110 may store the original Java archive in the repository 140.

The management platform 110 may configure an obtaining address of a Java archive, where the obtaining address is used by a container to obtain the Java archive. The management platform 110 may configure the obtaining address as a storage address of the original Java archive of the Java application A1. The enhancement container 121 may obtain the obtaining address, and obtain the original Java archive of the Java application A1 based on the obtaining address. In step 302a, the enhancement container 121 may obtain the original Java archive of the Java application A1 based on the obtaining address. After the enhancement container 121 obtains the original Java archive of the Java application A1, the enhancement container 121 may load the bytecode in the original Java archive of the Java application A1.

The enhancement container 121 may start to run an enhancement component when or before the enhancement container 121 starts to load the bytecode in the original Java archive of the Java application A1. Running of the enhancement component and loading of the original Java archive of the Java application A1 are performed in a same JVM.

In some embodiments, refer to FIG. 3. In step 301b, the management platform 110 may configure an enhancement component, for example, configure enhancement logic of the enhancement component. The management platform 110 may configure the enhancement component in response to a configuration operation of a user. The management platform 110 may store the enhancement component in the repository 140. A sidecar container 123 in a container group 130 may obtain the enhancement component from the repository 140, and store the enhancement component in a storage module of the container group 130. The enhancement container 121 may obtain the enhancement component from the storage module through step 302b, and run the enhancement component.

As shown in FIG. 3, step 201 includes step 303, and the enhancement container 121 loads the bytecode in the original Java archive of the Java application A1. The enhancement container 121 also runs the enhancement component while loading the bytecode in the original Java archive of the Java application A1.

In the process of loading the bytecode in the original Java archive of the Java application A1, the enhancement component may identify a to-be-enhanced class of the Java application A1 in the original Java archive, and perform bytecode enhancement on the identified to-be-enhanced class. Specifically, before generating an object of the to-be-enhanced class, the enhancement component modifies bytecode of the to-be-enhanced class based on bytecode enhancement logic. The enhancement container 121 may use modified bytecode to replace the bytecode (that is, bytecode before modification) of the to-be-enhanced class in the original Java archive, to obtain the enhanced Java archive of the Java application A1. In other words, compared with the original Java archive, bytecode of the to-be-enhanced class in the enhanced Java archive is the bytecode modified by the enhancement component based on the bytecode enhancement logic. More specifically, the bytecode of the to-be-enhanced class in the original Java archive may be set as bytecode B1, and the modified bytecode may be set as bytecode B2. In this case, when the enhancement container 121 loads the bytecode in the original Java archive, the enhancement component run by the enhancement container 121 modifies the bytecode B1 in the original Java archive to the bytecode B2, to obtain the enhanced Java archive of the Java application A1. The to-be-enhanced class of the Java application A1 herein refers to a class that needs bytecode enhancement in a startup process of the Java application A1.

In some embodiments, the enhancement container 121 may add a label to the enhanced Java archive. The label indicates that a Java archive in which the label is located is the enhanced Java archive.

In some embodiments, the enhancement container 121 may add an identifier of the to-be-enhanced class to a list, and include the list in the enhanced Java archive. The identifier of the class may be a class name.

The enhancement container 121 may store the enhanced Java archive in the microservice architecture 100. In some embodiments, as described above, the microservice architecture 100 includes the repository 140. As shown in FIG. 3, in step 304, the enhancement container 121 may store the enhanced Java archive in the repository 140.

The microservice architecture 100 still retains the original JAR. In other words, the enhanced JAR does not replace the original JAR, and both the enhanced JAR and the original JAR are stored in the microservice architecture 100 (for example, the repository 140).

In some embodiments, after the enhanced Java archive is stored, for example, after the enhanced Java archive is stored in the repository 140, the management platform 110 may redirect the obtaining address of the Java archive. Specifically, the obtaining address of the Java archive may be redirected from the storage address of the original Java archive to a storage address of the enhanced Java archive, that is, the obtaining address of the Java archive is modified from the storage address of the original Java archive to the storage address of the enhanced Java archive.

In some embodiments, the enhancement container 121 is a container that is in the microservice architecture 100 and that initially starts the Java application A1, that is, a container that initially loads a JAR of the Java application A1. As described above, the JAR of the Java application A1 loaded by the enhancement container 121 is specifically the original JAR of the Java application A1.

As described above, the application running method provided in this embodiment of this application is divided into the pre-enhancement phase and the formal application startup phase. Step 201 belongs to the pre-enhancement phase. In an example, the pre-enhancement phase may be a preparation phase before service deployment. In other words, in this example, the enhancement container 121 is not used to run the Java application A1, but is only used to generate the enhanced Java archive of the Java application A1. In this case, in this example, after the enhancement container 121 generates the enhanced Java archive of the Java application A1, a lifecycle of the enhancement container 121 ends. In other words, after the enhancement container 121 generates the enhanced Java archive of the Java application A1, the enhancement container 121 may be deleted. In an example, the pre-enhancement phase may be a service deployment phase before service scale-out. In this example, the enhancement container 121 is also used as a service container. After the original Java archive of the Java application A1 is loaded, that is, after the Java application A1 is started, the Java application A1 is run to provide a service. In this example, the enhancement container 121 is a container that is in the microservice architecture 100 and that initially loads the Java archive (specifically, the original Java archive) of the Java application A1 and run the Java application A1.

Still refer to FIG. 2. In step 202, a service container 122 in the container group 120 loads the enhanced Java archive of the Java application A1, to obtain a loading result C1. The service container 122 runs a JVM, and the enhanced Java archive of the Java application A1 is loaded in the JVM.

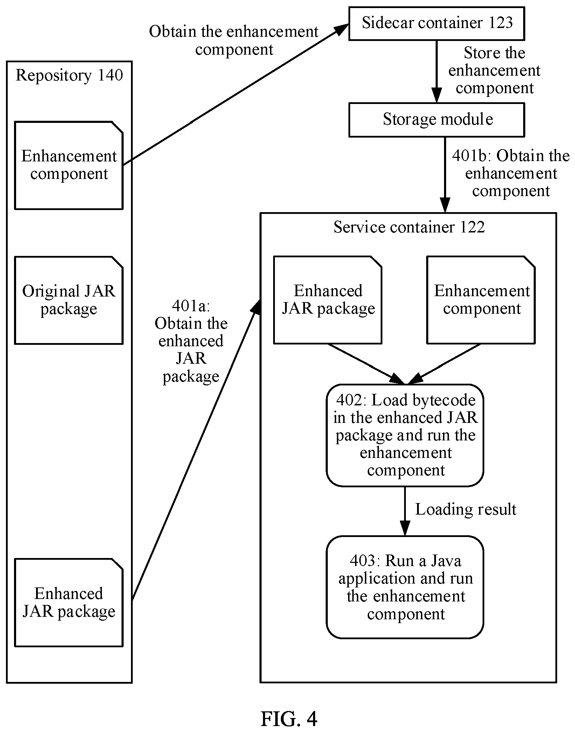

In some embodiments, the enhanced Java archive of the Java application A1 is stored in the repository 140, and the service container 122 may obtain the enhanced Java archive of the Java application A1 from the repository 140. As shown in FIG. 4, the service container 122 obtains the enhanced Java archive from the repository 140 through step 401a.

In some embodiments, as described above, the management platform 110 may modify the obtaining address of the Java archive of the Java application A1 from the storage address of the original Java archive of the Java application A1 to the storage address of the enhanced Java archive of the Java application A1. The service container 122 may obtain the Java archive based on the modified obtaining address, to obtain the enhanced Java archive of the Java application A1.

After obtaining the enhanced Java archive of the Java application A1, the service container 122 may load bytecode in the enhanced Java archive of the Java application A1, to start the Java application A1. The bytecode of the to-be-enhanced class in the enhanced Java archive is the bytecode modified by the enhancement component based on the enhancement logic. Therefore, when loading the bytecode in the enhanced Java archive, the service container 122 does not need to perform an enhancement operation on the bytecode of the to-be-enhanced class. The enhancement operation on the bytecode is also referred to as a modification operation on the bytecode, and refers to an operation of modifying the bytecode based on the bytecode enhancement logic. In other words, when loading the bytecode in the enhanced Java archive, the service container 122 may generate the object of the to-be-enhanced class directly based on the bytecode of the to-be-enhanced class in the enhanced Java archive. More specifically, as described above, the bytecode of the to-be-enhanced class in the enhanced Java archive is the bytecode B2. When loading the bytecode in the enhanced Java archive, the service container 122 generates the object of the to-be-enhanced class based on the bytecode B2. In this way, the service container loads the bytecode in the enhanced Java archive, and does not need to perform a bytecode enhancement operation on the to-be-enhanced class. This reduces startup time consumption of the Java application while ensuring a bytecode enhancement effect.

The service container 122 may include, in the loading result C1, the object of the to-be-enhanced class that is generated when the service container 122 loads the bytecode in the enhanced Java archive.

When completing loading of the bytecode in the enhanced Java archive, the service container 122 may obtain the loading result C1 that is needed by the service container 122 to run the Java application A1. In this way, in step 203, the service container 122 may run the Java application A1 based on the loading result C1, to provide a service.

In some embodiments, the bytecode enhancement is dynamically woven. In running duration after the Java application is started, there are still classes that need the bytecode enhancement. To perform the bytecode enhancement on a class of the Java application in the running duration after the Java application is started, as shown in step 403 in FIG. 4, the service container 122 also runs the enhancement component while running the Java application. The service container 122 may start to run the enhancement component when or before the service container 122 starts to load the bytecode in the enhanced Java archive of the Java application A1. Running of the enhancement component and loading of the enhanced Java archive of the Java application A1 are performed in a same JVM.

In an example, as described above, the enhancement component is already stored in the storage module of the container group 120 in which the sidecar container 123 is located. Refer to FIG. 4. In step 401b, the service container 122 obtains the enhancement component from the storage module. As shown in FIG. 4, step 202 includes step 402, and the service container 122 loads the bytecode in the enhanced Java archive of the Java application A1. The service container 122 also runs the enhancement component while loading the bytecode in the enhanced Java archive of the Java application A1.

In an example, the enhanced Java archive includes a list, and the list includes an identifier of the to-be-enhanced class. The list indicates that a modification operation on bytecode of a class (for example, the to-be-enhanced class) corresponding to the identifier in the list is already completed. In other words, the list indicates that the modification operation on the bytecode of the to-be-enhanced class is already completed. The service container 122 may obtain the list from the enhanced Java archive. In a process in which the service container 122 loads the bytecode in the enhanced Java archive, the enhancement component run by the service container 122 may ignore, based on the list, the modification operation on the bytecode of the to-be-enhanced class. The modification operation herein is also referred to as the enhancement operation, and refers to a modification operation performed on the bytecode based on the bytecode enhancement logic. More specifically, when identifying the to-be-enhanced class from the enhanced Java archive, the enhancement component may ignore the class represented by the identifier in the list, and no longer identify the class represented by the identifier in the list. Therefore, based on the list, time consumed by the enhancement component for identification when the service container loads the bytecode in the Java archive can be reduced, and the startup time consumption of the Java application is further reduced.

In some embodiments, after step 203, a running status of the service container 122 running the Java application A1 may be observed, that is, the running status of the service container 122 running the Java application A1 based on the loading result C1 is observed. If an exception occurs in the running status of the service container 122 running the Java application Al based on the loading result C1, the service container 122 may load the original Java archive of the Java application A1, to obtain a loading result C2. Then, the service container 122 may run the Java application A1 based on the loading result C2. In other words, in this embodiment, when an exception occurs when a service container runs a Java application by loading an enhanced Java archive, the service container may run the Java application by loading an original Java archive, to ensure that the Java application can run normally.

In some embodiments, when a service provided by the Java application A1 is deployed for a container group (for example, the container group 130) other than the container group 120, the enhanced Java archive of the Java application A1 may also be used to start the Java application A1, so as to improve service deployment efficiency or timeliness of service scale-out. The following uses an example in which the Java application A1 is started in a service container 131 in the container group 130 for description.

The service container 131 may obtain a loading result C3 by using the bytecode in the enhanced Java archive of the Java application A1.

The service container 131 may obtain the enhanced Java archive of the Java application A1, for example, obtain the enhanced Java archive of the Java application A1 from the repository 140, and then load the enhanced Java archive of the Java application A1. For details, refer to the foregoing descriptions of the service container 122 obtaining the enhanced Java archive.

After obtaining the enhanced Java archive of the Java application A1, the service container 131 may load the bytecode in the enhanced Java archive of the Java application A1, to start the Java application A1. When loading the bytecode in the enhanced Java archive, the service container 131 may generate the object of the to-be-enhanced class directly based on the bytecode of the to-be-enhanced class in the enhanced Java archive. In other words, when the service container 131 loads the bytecode in the enhanced Java archive, the service container 131 generates the object of the to-be-enhanced class based on the bytecode B2. In this way, the service container 131 loads the bytecode in the enhanced Java archive, and does not need to perform the bytecode enhancement operation on the to-be-enhanced class. This reduces the startup time consumption of the Java application A1 while ensuring the bytecode enhancement effect of the Java application A1.

The service container 131 may include, in the loading result C3, the object of the to-be-enhanced class that is generated in a process in which the service container 131 loads the bytecode in the enhanced Java archive. When completing loading of the bytecode in the enhanced Java archive, the service container 131 may obtain the loading result C3 that is needed by the service container 131 to run the Java application A1. Then, the service container 131 may run the Java application A1 based on the loading result C3, to provide a service.

In conclusion, according to the application running method provided in this embodiment of this application, an enhanced Java archive of an application can be generated, and bytecode enhancement is already performed on bytecode of a to-be-enhanced class in the enhanced Java archive. When service deployment or service scale-out is performed in a microservice architecture, a container used for the service deployment or the service scale-out can start the application by loading the enhanced Java archive of the application. In a process of loading the enhanced Java archive, a bytecode enhancement operation does not need to be performed, so that startup time consumption can be reduced, and service deployment efficiency or timeliness of service scale-out can be improved. In addition, the bytecode enhancement is already performed on the bytecode of the to-be-enhanced class in the enhanced Java archive. Therefore, the application can be started by loading the enhanced Java archive of the application, thereby ensuring a bytecode enhancement effect. In short, the application running method provided in this embodiment of this application reduces the startup time consumption of the application while ensuring the bytecode enhancement effect of the application.

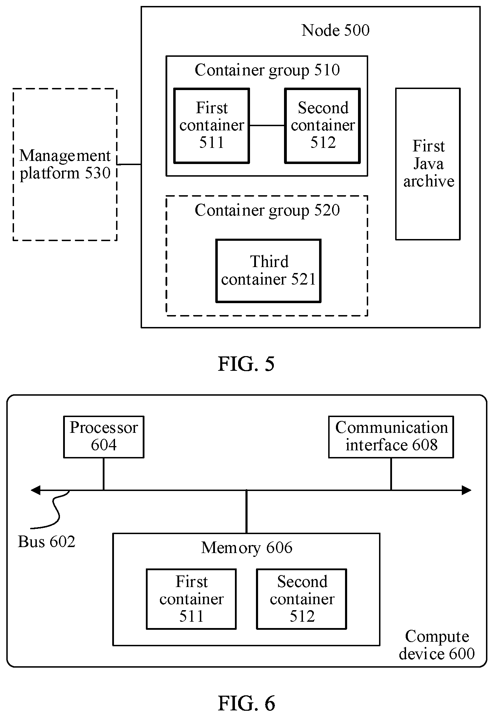

An embodiment of this application provides a node 500 for running a container group. As shown in FIG. 5, the node 500 runs a container group 510, and the node 500 stores a first Java archive of an application. The container group 510 includes a first container 511 and a second container 512.

The first container 511 is configured to: load bytecode in the first Java archive, to obtain a second Java archive of the application, where the second Java archive includes first bytecode of a to-be-enhanced class in the application, the first container 511 runs a first enhancement component, and the first bytecode is obtained by modifying, by the first enhancement component, bytecode of the to-be-enhanced class in the first Java archive in a process in which the first container 511 loads the bytecode in the first Java archive.

The second container 512 is configured to: load bytecode in the second Java archive, to obtain a first loading result, where the first loading result includes a first object of the to-be-enhanced class, and the first object is created by the second container 512 based on the first bytecode in a process in which the second container 512 loads the bytecode in the second Java archive.

The second container 512 is further configured to: run the application based on the first loading result.

In some embodiments, the second container 512 runs a second enhancement component, the second Java archive includes a list, and the list includes an identifier of the to-be-enhanced class; and the second container 512 is further configured to: obtain the list from the second Java archive, where in the process in which the second container loads the bytecode in the second Java archive, the list indicates that a modification operation on the first bytecode is already completed.

In some embodiments, the node 500 further includes a container group 520, and a third container 521 in the container group 520 is configured to: load the bytecode in the second Java archive, to obtain a second loading result; and run the application based on the second loading result.

In some embodiments, the node 500 is connected to a management platform 530, and the management platform 530 is configured to: modify an obtaining address of a Java archive from a storage address of the first Java archive to a storage address of the second Java archive; and the second container 512 is configured to: obtain the second Java archive based on the obtaining address.

In some embodiments, the second container 512 is further configured to: when an exception occurs when the second container 512 runs the application based on the first loading result, load the first Java archive, to obtain a third loading result; and run the application based on the third loading result.

In some embodiments, the first container 511 is a container that is in the node 500 and that initially loads the first Java archive.

For functions of a container in the node 500, refer to the foregoing descriptions of the container in the microservice architecture 100. For example, for functions of the first container 511, refer to the foregoing descriptions of the enhancement container 121, and for functions of the second container 512, refer to the foregoing descriptions of the service container 122.

This application further provides a compute device 600. As shown in FIG. 6, the compute device 600 includes: a bus 602, a processor 604, a memory 606, and a communication interface 608. The processor 604, the memory 606, and the communication interface 608 communicate with each other through the bus 602. The compute device 600 may be a server or a terminal device. It should be understood that quantities of processors and memories in the compute device 600 are not limited in this application.

The bus 602 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one line is used for representation in FIG. 6, but this does not mean that there is only one bus or only one type of bus. The bus 602 may include a path for transferring information between components (for example, the memory 606, the processor 604, and the communication interface 608) of the compute device 600.

The processor 604 may include any one or more of processors such as a central processing unit (central processing unit, CPU), a graphics processing unit (graphics processing unit, GPU), a microprocessor (micro processor, MP), or a digital signal processor (digital signal processor, DSP).

The memory 606 may include a volatile memory (volatile memory), for example, a random access memory (random access memory, RAM). Alternatively, the memory 606 may include a non-volatile memory (non-volatile memory), for example, a read-only memory (read-only memory, ROM), a flash memory, a hard disk drive (hard disk drive, HDD), or a solid state drive (solid state drive, SSD).

The memory 606 stores executable program code, and the processor 604 executes the executable program code to separately implement functions of the foregoing first container 511 (or the enhancement container 121) and the foregoing second container 512 (or the service container 122), so as to implement the method shown in FIG. 2. In other words, the memory 606 stores instructions used to perform the method shown in FIG.2.

The communication interface 608 uses a transceiver module, for example, but not limited to, a network interface card or a transceiver, to implement communication between the compute device 600 and another device or a communication network.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device like a desktop computer, a notebook computer, or a smartphone.

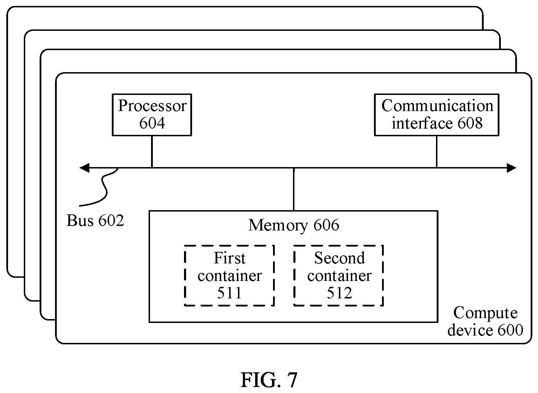

As shown in FIG. 7, the compute device cluster includes at least one compute device 600. Memories 606 in one or more compute devices 600 in the compute device cluster may store same instructions used to perform the method shown in FIG.2.

In some possible implementations, the memories 606 in the one or more compute devices 600 in the compute device cluster may alternatively separately store a part of the instructions used to perform the method shown in FIG.2. In other words, a combination of the one or more compute devices 600 may jointly perform the instructions used to perform the method shown in FIG.2.

It should be noted that memories 606 in different compute devices 600 in the compute device cluster may store different instructions, which are separately used to perform a part of the functions of the node 500. In other words, the instructions stored in the memories 606 in different compute devices 600 may implement functions of one or more containers in the first container 511 (or the enhancement container 121) and the second container 512 (or the service container 122).

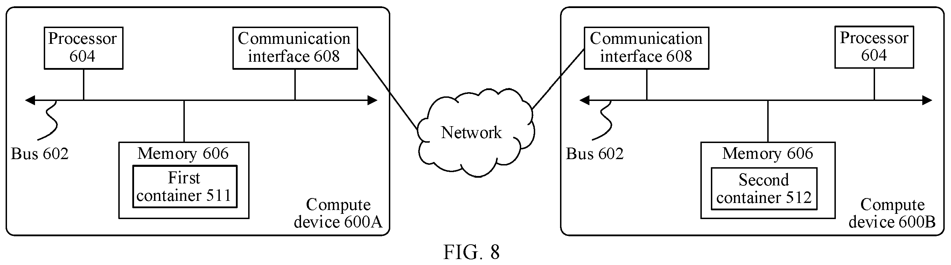

In some possible implementations, the one or more compute devices in the compute device cluster may be connected through a network. The network may be a wide area network, a local area network, or the like. FIG. 8 shows a possible implementation. As shown in FIG. 8, two compute devices 600A and 600B are connected through a network. Specifically, the compute devices are connected to the network through communication interfaces in the compute devices. In this type of possible implementation, a memory 606 in the compute device 600A stores instructions used to perform a function of the first container 511 (or the enhancement container 121). In addition, a memory 606 in the compute device 600B stores instructions used to perform a function of the second container 512 (or the service container 122).

It should be understood that functions of the compute device 600A shown in FIG. 8 may alternatively be completed by a plurality of compute devices 600. Similarly, functions of the compute device 600B may alternatively be completed by a plurality of compute devices 600.

An embodiment of this application further provides another compute device cluster. For a connection relationship between compute devices in the compute device cluster, refer to a similar connection manner in the compute device clusters in FIG. 7 and FIG. 8. A difference lies in that memories 606 in one or more compute devices 600 in the compute device cluster may store same instructions used to perform the method shown in FIG.2.

In some possible implementations, the memories 606 in the one or more compute devices 600 in the compute device cluster may alternatively separately store a part of the instructions used to perform the method shown in FIG.2. In other words, a combination of the one or more compute devices 600 may jointly perform the instructions used to perform the method shown in FIG.2.

An embodiment of this application further provides a computer program product including instructions. The computer program product may be software or a program product that includes instructions and that can run on a compute device or can be stored in any usable medium. When the computer program product runs on at least one compute device, the at least one compute device is enabled to perform the method shown in FIG.2.

An embodiment of this application further provides a computer-readable storage medium. The computer-readable storage medium may be any usable medium that can be stored by a compute device, or a host migration device, such as a data center, including one or more usable media. The usable media may be a magnetic medium (for example, a floppy disk, a hard disk, or a magnetic tape), an optical medium (for example, a DVD), a semiconductor medium (for example, a solid state drive), or the like. The computer-readable storage medium includes instructions, and the instructions instruct the compute device to perform the method shown in FIG. 2.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of this application.

## Claims

1. An application running method, applied to a microservice architecture, wherein the microservice architecture comprises a first container group, the microservice architecture stores a first Java archive of an application, and the method comprises:
loading, by a first container in the first container group, bytecode in the first Java archive, to obtain a second Java archive of the application, wherein the second Java archive comprises first bytecode of a to-be-enhanced class in the application, the first container runs a first enhancement component, and the first bytecode is obtained by modifying, by the first enhancement component, bytecode of the to-be-enhanced class in the first Java archive in a process in which the first container loads the bytecode in the first Java archive;
loading, by a second container in the first container group, bytecode in the second Java archive, to obtain a first loading result, wherein the first loading result comprises a first object of the to-be-enhanced class, and the first object is created by the second container based on the first bytecode in a process in which the second container loads the bytecode in the second Java archive; and
running, by the second container, the application based on the first loading result.

2. The method according to claim 1, wherein the second container runs a second enhancement component, the second Java archive comprises a list, and the list comprises an identifier of the to-be-enhanced class; and
the loading, by the second container, the bytecode in the second Java archive comprises:
obtaining, by the second container, the list from the second Java archive, wherein in the process in which the second container loads the bytecode in the second Java archive, the list indicates that a modification operation on the first bytecode is already completed.

3. The method according to claim 1 or 2, wherein the microservice architecture further comprises a second container group, and the method further comprises:
loading, by a third container in the second container group, the bytecode in the second Java archive, to obtain a second loading result; and
running, by the third container, the application based on the second loading result.

4. The method according to any one of claims 1 to 3, wherein
the microservice architecture further comprises a management platform, and the method further comprises: modifying, by the management platform, an obtaining address of a Java archive from a storage address of the first Java archive to a storage address of the second Java archive; and
the loading, by the second container, the bytecode in the second Java archive comprises:
obtaining, by the second container, the second Java archive based on the obtaining address.

5. The method according to any one of claims 1 to 4, wherein the method further comprises:
when an exception occurs when the second container runs the application based on the first loading result, loading, by the second container, the first Java archive, to obtain a third loading result; and
running, by the second container, the application based on the third loading result.

6. The method according to any one of claims 1 to 5, wherein the first container is a container that is in the microservice architecture and that initially loads the first Java archive.

7. A node that runs a container group, wherein the node runs a first container group, and the node stores a first Java archive of an application;
a first container in the first container group is configured to: load bytecode in the first Java archive, to obtain a second Java archive of the application, wherein the second Java archive comprises first bytecode of a to-be-enhanced class in the application, the first container runs a first enhancement component, and the first bytecode is obtained by modifying, by the first enhancement component, bytecode of the to-be-enhanced class in the first Java archive in a process in which the first container loads the bytecode in the first Java archive;
a second container in the first container group is configured to: load bytecode in the second Java archive, to obtain a first loading result, wherein the first loading result comprises a first object of the to-be-enhanced class, and the first object is created by the second container based on the first bytecode in a process in which the second container loads the bytecode in the second Java archive; and
the second container is further configured to: run the application based on the first loading result.

8. The node according to claim 7, wherein the second container runs a second enhancement component, the second Java archive comprises a list, and the list comprises an identifier of the to-be-enhanced class; and
the second container is further configured to: obtain the list from the second Java archive, wherein in the process in which the second container loads the bytecode in the second Java archive, the list indicates that a modification operation on the first bytecode is already completed.

9. The node according to claim 7 or 8, wherein the node further runs a second container group, and a third container in the second container group is configured to:
load the bytecode in the second Java archive, to obtain a second loading result; and
run the application based on the second loading result.

10. The node according to any one of claims 7 to 9, wherein the node is connected to a management platform, and the management platform is configured to: modify an obtaining address of a Java archive from a storage address of the first Java archive to a storage address of the second Java archive; and
the second container is configured to: obtain the second Java archive based on the obtaining address.

11. The node according to any one of claims 7 to 10, wherein the second container is further configured to:
when an exception occurs when the second container runs the application based on the first loading result, load the first Java archive, to obtain a third loading result; and
run the application based on the third loading result.

12. The node according to any one of claims 7 to 11, wherein the first container is a container that is in the node and that initially loads the first Java archive.

13. A compute device cluster, comprising at least one compute device, wherein each compute device comprises a processor and a memory; and
the processor of the at least one compute device is configured to execute instructions stored in the memory of the at least one compute device, to enable the compute device cluster to perform the method according to any one of claims 1 to 6.

14. A computer-readable storage medium, comprising computer program instructions, wherein when the computer program instructions are executed by a compute device cluster, the compute device cluster performs the method according to any one of claims 1 to 6.

15. A computer program product comprising instructions, wherein when the instructions are run by a computer device cluster, the computer device cluster is enabled to perform the method according to any one of claims 1 to 6.
